# EUROPÄISCHE PATENTANMELDUNG

(11) **EP 4 512 630 A1**
(43) Veröffentlichungstag der Anmeldung: **26.02.2025**
(21) Anmeldenummer: 24195516.0
(22) Anmeldetag: 21.08.2024
(51) Int. Cl.: B42D 25/24, B42D 25/36, B42D 25/415, B42D 25/465, B32B 27/36, D21H 21/40

(54) **KIRHEDISFOLIA MIT KAPSELSYSTEM UND VERFAHREN-AUER-HERS**

(30) Priorität: 22.08.2023 DE 102023122409
(71) Anmelder: Veridos GmbH, 10969 Berlin (DE)
(72) Erfinder: Riedl, Josef, 85935 Attenkirchen (DE); Tarantino, Peter, 80687 München (DE); Fabian, Cristina, 85748 Garching (DE)
(74) Vertreter: Ter Meer Steinmeister & Partner

(57) **Zusammenfassung**

Die Erfindung umfasst eine Sicherheitsfolie und ein Verfahren zur Herstellung einer solchen, umfassend eine Vielzahl von in der Sicherheitsfolie eingebetteten Mikrokapseln aus einer Hülle mit einem Wirkstoff als Kernmaterial welcher bei Zerstörung der Hülle freigesetzt wird und eine optisches Sicherheitsmerkmal bildet. Die Erfindung umfasst weiter ein Verfahren zur Fälschungssicherheit mittels einer entsprechenden Sicherheitsfolie. Eine solche Sicherheitsfolie findet insbesondere Verwendung bei der beweglichen Befestigung einer Datenseite an einem Träger wie beispielsweise einem Passbuch.

## Beschreibung

Der Gegenstand der Erfindung betrifft eine Sicherheitsfolie und ein Verfahren zur Herstellung einer Sicherheitsfolie sowie ein Verfahren zur Fälschungssicherheit mittels einer Sicherheitsfolie. Dabei findet eine derartige Sicherheitsfolie und ein entsprechendes Verfahren insbesondere bei der beweglichen Befestigung einer Datenseite an einem Träger, beispielsweise der Einbindung einer Datenseite in ein Passbuch, Anwendung.

Ein Verfahren zur Herstellung einer Folie, insbesondere zur Herstellung eines tragbaren Datenträgers wie beispielsweise der Datenseite in einem Passbuch, ist aus der Druckschrift EP 2 872 305 B1 bekannt.

Eine Datenseite zur beweglichen Befestigung an einem Träger, insbesondere zur Einbindung in ein Passbuch, ist aus der EP 1 861 262 B1 bekannt.

Reißfeste Folien spielen bei fälschungssicheren Dokumenten, beispielsweise Personalausweisen, Passbüchern und Ähnlichem eine wichtige Rolle, da sie die Vollständigkeit des Dokuments sicherstellen sowie einen gewissen Manipulationsschutz bzw. Fälschungssicherheit bieten. Üblich ist es beispielsweise, eine starre Datenseite aus Kunststoff umfassend ein Sicherheitselement beweglich an einem Ausweisdokument wie einem Passbuch zu befestigen. Eine solche Datenseite wird dabei beispielsweise mittels einer mit der Datenseite verbundenen beweglichen Lasche in das Passbuch eingebunden. Zur Verhinderung von Manipulation und Fälschungssicherheit kommt dabei zum Teil ein fluoreszierender Druck auf der Lasche zum Einsatz. Es ist wünschenswert, die Fälschungssicherheit von Sicherheitsfolien insbesondere bei einer Nutzung als Befestigungselement zu verbessern.

Es ist daher eine Aufgabe der Erfindung eine Sicherheitsfolie und ein Verfahren zur Herstellung einer Sicherheitsfolie bereitzustellen, welche ein Sicherheitsmerkmal, insbesondere ein optisches Sicherheitsmerkmal, aufweist. Es ist dabei eine weitere Aufgabe ein Sicherheitsmerkmal bereitzustellen, welches den Originalzustand der Sicherheitsfolie anzeigt. Auch ist es eine weitere Aufgabe ein Sicherheitsmerkmal bereitzustellen, welches einen Manipulationsversuch bzw. eine manipulierte Sicherheitsfolie anzeigt.

Diese Aufgaben werden gelöst durch ein Verfahren zur Herstellung einer Sicherheitsfolie nach dem Hauptanspruch sowie ein Verfahren zur Fälschungssicherheit mittels einer Sicherheitsfolie und eine erfindungsgemäße Sicherheitsfolie nach den nebengeordneten Ansprüchen.

Die erfindungsgemäße Sicherheitsfolie umfassend zumindest zwei stoffschlüssig verbundene Folien und eine Vielzahl von Mikrokapseln aus einer Hülle mit einem Wirkstoff als Kernmaterial, welcher bei Zerstörung der Hülle freigesetzt wird, wobei die Mikrokapseln auf zumindest einem Teil eines zwischen den Folien angeordneten Gewebes und/oder auf zumindest einer der anderen Folie zugewandten Seite zumindest einer Folie verteilt angeordnet sind.

Vorzugsweise sind die Mikrokapseln dabei zwischen zumindest einem Teil des Gewebes und zumindest einem Teil einer am Gewebe angeordneten Seite zumindest einer Folie angeordnet. Die Anordnung des Gewebes zwischen den Folien bzw. der Einschluss des Gewebes durch die Folien erhöht die Reißfestigkeit der Folie und verbessert es, diese beispielsweise in ein Passbuch einzubinden bzw. einzunähen. Die Mikrokapseln sind dabei auf dem Gewebe und/oder auf zumindest einer Seite einer Folie angeordnet, die dem Gewebe zugewandt ist. Sie sind damit in die Sicherheitsfolie eingebettet und durch diese gegenüber zufälliger Zerstörung geschützt. Die Mikrokapseln können dabei auch zwischen dem Gewebe und beiden Folien angeordnet sein oder das Gewebe vollständig durchdringen und die einzelnen Gewebefäden bedecken. Dabei müssen die Mikrokapseln nicht direkt am Gewebe anliegen, sie können auch zwischen zwei Folien angeordnet sein.

Vorzugsweise sind die Mikrokapseln gleichmäßig verteilt angeordnet.

Gemäß einer bevorzugten Ausführungsform der Erfindung ist der Wirkstoff an Kreuzungspunkten des Gewebes freigesetzt und bildet ein optisches Sicherheitsmerkmal. Die Kreuzungspunkte des Gewebes sind dabei die Punkte, an denen sich Kettfäden und Schussfäden kreuzen und sind die Stellen des Gewebes mit der größten Dicke, da dort zumindest zwei Fäden übereinanderliegen. Das Gewebe ist dabei vorzugsweise ein Kunststoffgewebe, beispielsweise ein Siebdruckgewebe, weiter beispielsweise aus Polyethylenterephtalat (PET) oder Polyamid (PA). Vorzugsweise weist das Gewebe eine hohe Reißfestigkeit und mechanische Stabilität auf.

Gemäß einer bevorzugten Ausführungsform ist der Wirkstoff in einem Teilbereich der Sicherheitsfolie freigesetzt. Dieser kann auch den Kreuzungspunkten des Gewebes entsprechen. Der Teilbereich ist dabei vorzugsweise ein Teilbereich der Sicherheitsfolie in dem diese einer erhöhte Dicke und/oder die größte Dicke aufweist. Der Teilbereich wird dabei beispielsweise durch einen Relieflack oder eine Struktur einer Folie gebildet. Beispielsweise kann ein Relieflack einen Schriftzug oder ein Muster bilden, welches dem Teilbereich der Sicherheitsfolie mit der größten Dicke entspricht.

Durch den selektiv nur an den Kreuzungspunkten bzw. in dem Teilbereich freigesetzten Wirkstoff bildet das optische Sicherheitsmerkmal die Struktur des Gewebes also die Anordnung der Kreuzungspunkte bzw. den Teilbereich der Sicherheitsfolie genau nach. Das heißt, dass sich durch den freigesetzten Wirkstoff ergebende optische Sicherheitsmerkmal und das Muster der Kreuzungspunkte des Gewebes bzw. der Teilbereich der Sicherheitsfolie stimmen genau überein, dies gilt auch für die Anordnung zueinander. Dabei ist es möglich, dass der Wirkstoff nur in einem Teil des Gewebes freigesetzt ist.

Je nach Art des verwendeten Gewebes können dabei die Mikrokapseln auch selektiv an nur einem Teil der Kreuzungspunkte in einem Bereich zerstört und der Wirkstoff freigesetzt sein. Beispielsweise können die Mikrokapseln nur an den Kreuzungspunkten zerstört sein, an denen ein Schussfaden über bzw. unter einem Kettfaden kreuzt und die Mikrokapseln zwischen dem Schussfaden und einer der Folien angeordnet sind. Entsprechend des Webmusters ist der Wirkstoff dementsprechend nur an vorbestimmten Kreuzungspunkten freigesetzt, wodurch die Fälschungssicherheit erhöht wird. Übliche Webmuster können dabei beispielsweise eine Leinwandbindung, eine Körperbindung und eine Atlasbindung sein. Darüber hinaus können selbstverständlich weitere Webarten, insbesondere Webarten mit einem Sicherheitsmuster genutzt werden. Auch kann das Gewebe derart ausgeführt sein, dass der Wirkstoff durch Zerstörung der Mikrokapseln nur an den Kreuzungspunkten freigesetzt ist, bei denen ein Kettfaden über bzw. unter einem Schussfaden kreuzt und die Mikrokapseln zwischen dem Kettfaden und einer der Folien angeordnet sind.

Nach einer weiteren bevorzugten Ausführungsform ist zumindest eine Folie ein Holzwerkstoff und/oder eine Metallfolie und/oder eine metallisierte Folie und/oder eine perforierte Folie und/oder umfasst zumindest eine Folie einen Relieflack und/ oder ist strukturiert. Der Teilbereich der Sicherheitsfolie mit erhöhter Dicke kann dabei beispielsweise durch den Relieflack oder durch Bereiche einer strukturierten Folie gebildet werden.

Die Mikrokapseln bestehen aus einer Hülle und einem Kernmaterial, welches der Wirkstoff ist. Sie sind vorzugsweise derart ausgeführt, dass sie unter einem definierten Druck zerstört werden und den Wirkstoff freisetzen.

Der Druck ist vorzugsweise ein Druck, der beim stoffschlüssigen Verbinden der Folien an den Kreuzungspunkten des Gewebes und/oder in dem Teilbereich der Sicherheitsfolie entsteht. Das stoffschlüssige Verbinden ist vorzugsweise ein Laminationsverfahren. Bei einem üblichen stoffschlüssigen Verbindungsverfahren werden zumindest zwei Folien unter Druck und einer definierten Temperatur, wie beispielsweise bei einer Heißlamination, miteinander verbunden. Dies kann auch durch die Verwendung eines geeigneten Klebermaterials erreicht werden. Durch die erhöhte Dicke des Gewebes an den Kreuzungspunkten und/oder durch die erhöhte Dicke der Sicherheitsfolie im Teilbereich herrscht durch den beim Verbinden aufgebrachten flächigen Druck auf die Sicherheitsfolie an diesen Stellen ein erhöhter Druck auf die Mikrokapseln gegenüber den restlichen Bereichen der Sicherheitsfolie. Durch eine entsprechende Ausführung der Mikrokapseln sind diese nach dem Verbinden nur an definierten Kreuzungspunkten und/oder Teilbereichen zerstört und der Wirkstoff ist nur in diesen Bereichen freigesetzt.

Durch die entsprechende Ausführung von Schussfaden und Kettfaden des Gewebes kann dabei sichergestellt werden, dass der Verbindungsdruck beispielsweise nur an den Kreuzungspunkten zur Zerstörung der Mikrokapseln ausreicht, an denen diese zwischen dem Schussfaden und einer der Folien angeordnet sind und der Schussfaden einen Kettfaden kreuzt. Bzw. kann sichergestellt werden, dass der Verbindungsdruck an den Kreuzungspunkten, an denen die Mikrokapseln zwischen Kettfaden und einer der Folien angeordnet sind, nicht ausreicht, um die Kapseln zu zerstören und den Wirkstoff freizusetzen. Dies gilt selbst verständlich auch im umgekehrten Fall. Dabei müssen die Mikrokapseln nicht direkt am Gewebe anliegen, bei Verwendung zumindest einer ausreichend flexiblen Folie können die Mikrokapseln auch zwischen zwei Folien angeordnet sein, hierbei wird der Druck auch durch die ausreichend flexible Folie auf die Mikrokapseln übertragen, wodurch sie nur in den Bereichen zwischen den zwei Folien zerstört werden, die den Bereichen von Kreuzungspunkten des Gewebes entsprechen.

Der Druck kann auch eine Druckkraft sein, welche bei einem anderen Verfahrensschritt der Folienherstellung aufgebracht wird, oder er kann eine Druckkraft sein, welche gezielt zur Zerstörung der Kapseln aufgebracht wird. Beispielsweise kann der Teilbereich auch erzeugt werden, in dem ein strukturiertes Werkzeug beim Verbinden der Folien oder in einem gesonderten Herstellungsschritt selektiv auf die Sicherheitsfolie Druck ausübt. Die Mikrokapseln werden dadurch nur in den selektierten Bereichen zerstört, wodurch Wirkstoff freigesetzt wird und ein optisches Sicherheitsmerkmal bildet welches der Werkzeugstruktur entspricht. Beispielsweise kann das strukturierte Werkzeug ein üblicher Druckstempel zur Erzeugung eines Sicherheitsmusters sein.

Nach einer weiteren bevorzugten Ausführungsform sind die Mikrokapseln derart ausgeführt, dass sie bei Entfernung des Gewebes zwischen den Folien und/oder der Auftrennung und/oder der Abtrennung der Folien zerstört werden, der Wirkstoff freigesetzt wird und ein optisches Sicherheitsmerkmal bildet. Dabei können die Mikrokapseln derart ausgeführt sein, dass sie unter einer definierten Druckkraft und/oder unter einer definierten Zugkraft zerstört werden und den Wirkstoff freisetzen.

Eine solche Ausführungsform verbessert weiter die Manipulationssicherheit der erfindungsgemäßen Sicherheitsfolie. Eine Auftrennung und/oder Abtrennung zumindest zweier Folien und/oder einer der Folien und des Gewebes führt zu einer Zerstörung der Mikrokapseln im Bereich der Auftrennung, wodurch der Wirkstoff in diesem Bereich freigesetzt wird und ein optisches Sicherheitsmerkmal bildet. Hierdurch ist eine vorhergegangene Manipulation oder ein Manipulationsversuch deutlich erkennbar. Die Mikrokapseln sind dabei vorzugsweise derart ausgeführt, dass die bei der Auftrennung herrschenden Druck- bzw. Zugkräfte zur Zerstörung führen. Dabei kann eine Auftrennung der Folien auch eine Auftrennung zwischen der ersten oder der zweiten Folie und zumindest einer weiteren Folie der Sicherheitsfolie sein. Hierbei sind die Mikrokapseln derart ausgeführt, dass die dadurch entstehenden Druckkräfte bzw. Zugkräfte zur Zerstörung ausreichen.

Selbstverständlich können die Mikrokapseln auch derart ausgeführt sein, dass sie sowohl bei der Herstellung der Sicherheitsfolie selektiv zerstört werden als auch bei Entfernung des Gewebes und/oder Auftrennung bzw. Abtrennung der Folien zerstört werden.

Nach einer weiteren bevorzugten Ausführungsform ist der Wirkstoff ein Farbstoff. Der Wirkstoff kann dabei ein üblicher Sicherheitsfarbstoff oder anderer üblicher Farbstoff sein. Weiter kann der Wirkstoff ein farbloser Farbstoff wie beispielsweise Kristallviolettlacton sein, welcher nach Freisetzung mit einem zweiten Wirkstoff in der Sicherheitsfolie zu einem farbigen Farbstoff reagiert. Der Wirkstoff kann auch ein anderer üblicher Farbgeber/Farbbildner sein. Dabei kann das Gewebe und/oder zumindest eine der Folien eine Beschichtung mit dem zweiten Wirkstoff umfassen. Das optische Sicherheitsmerkmal ist dabei ein sichtbares Farbmerkmal, somit wird es beispielsweise von Farbpunkten durch Farbstofffreisetzung an Kreuzungspunkten des Gewebes und/oder in dem Teilbereich der Sicherheitsfolie gebildet. Weiter beispielsweise wird es nach erfolgter Manipulation oder versuchter Manipulation von Farbpunkten und/ oder einer Farbfläche im Bereich der Manipulation bzw. des Manipulationsversucht gebildet.

Weiter vorzugsweise sind die Mikrokapseln in einem Trägermaterial verteilt angeordnet. Ein solches vereinfacht die Aufbringung der Mikrokapseln auf zumindest einen Bestandteil der Sicherheitsfolie wie beispielsweise dem Gewebe. Ebenso kann der zweite Wirkstoff in dem Trägermaterial enthalten sein, bzw. das Trägermaterial kann die Beschichtung mit dem zweiten Wirkstoff bilden.

Nach einer weiteren bevorzugten Ausführungsform ist eine Folie eine auf das Gewebe aufgebrachte Vergussmasse. Dabei ist das Gewebe zumindest teilweise von der Vergussmasse eingeschlossen. Das Gewebe und die Vergussmasse können durch die Wahl geeigneter Materialien so aufeinander eingestellt werden, dass eine optimale weitere Verarbeitung möglich ist. Ein weiterer Vorteil einer solchen Ausführungsform ist die erhöhte Festigkeit in der Sicherheitsfolie durch stoffschlüssige Verbindung der durch die Vergussmasse gebildeten Folie mit einer zweiten Folie. Dies verbessert weiter die Manipulationssicherheit der Sicherheitsfolie da das Gewebe fester mit den Folien verbunden ist. Eine Folie kann dabei auch eine auf einen anderen Bestandteil der Folie aufgebrachte Vergussmasse sein. Beispielsweise kann die Vergussmasse auf einen Holzwerkstoff oder eine strukturierte Metallfolie aufgebracht werden.

Nach einer weiteren bevorzugten Ausführungsform umfasst zumindest eine Folie einen transluzenten oder transparenten Teilbereich durch den das optische Sicherheitsmerkmal sichtbar ist. Dabei kann die Folie einen transluzenten oder transparenten Streifen aufweisen oder auch vollständig transluzent oder transparent sein. Weiter können beide Folien einen transluzenten oder transparenten Teilbereich aufweisen oder vollständig derart ausgeführt sein. Beispielsweise weisen beide Folien einen transparenten Streifen auf welcher übereinander angeordnet ist, sodass das optische Sicherheitsmerkmale in diesem Bereich sichtbar ist. Bei beispielhafter Verwendung eines entsprechenden transluzenten Streifens ist das optische Sicherheitsmerkmal zumindest im Durchlicht erkennbar. Auch das Gewebe kann dabei ein transparentes oder transluzentes Gewebe sein.

Der Gegenstand der Erfindung umfasst weiter ein Verfahren zur Herstellung einer Sicherheitsfolie, insbesondere einer Sicherheitsfolie nach einer der beschriebenen Ausführungsformen, wobei das Verfahren folgende Schritte umfasst: Beschichtung zumindest eines Teils eines Gewebes und/oder eines Teils einer ersten Folie mit einer Vielzahl von Mikrokapseln aus einer Hülle mit einem Wirkstoff als Kernmaterial welcher bei Zerstörung der Hülle freigesetzt wird; Anordnung der ersten Folie an einer zweiten Folie, wobei die Mikrokapseln zwischen den Folien angeordnet sind und/oder wobei das Gewebe zwischen den Folien angeordnet ist und die Mikrokapseln zumindest zwischen dem Gewebe und zumindest einer Folie angeordnet sind; stoffschlüssiges Verbinden der Folien.

Vorzugsweise sind die Mikrokapseln dabei zwischen zumindest einem Teil des Gewebes und zumindest einem Teil einer am Gewebe angeordneten Seite zumindest einer Folie angeordnet. Die Anordnung des Gewebes zwischen den Folien bzw. der Einschluss des Gewebes durch die Folien erhöht die Reißfestigkeit der Folie und verbessern ihre Fähigkeit, diese beispielsweise in ein Passbuch einzubinden bzw. einzunähen. Die Mikrokapseln werden dabei zumindest in einem Teilbereich des Gewebes und/oder zumindest einer der Folien als Beschichtung aufgebracht und durch das stoffschlüssige Verbinden der Folien ebenfalls eingeschlossen und sind dadurch in der Folie eingebettet. Dadurch sind sie beispielsweise vor unbeabsichtigter Zerstörung geschützt. Die Mikrokapseln können dabei beispielsweise die Fäden des Gewebes vollständig bedecken oder eine flächige Beschichtung einer der Folien bilden. Vorzugsweise wird die Beschichtung derart ausgeführt, dass die Mikrokapseln gleichmäßig verteilt vorliegen.

Nach einer weiteren bevorzugten Ausführungsform werden die Mikrokapseln durch einen Druck beim Verbinden der Folien und/oder durch einen Druck eines Werkzeugs zumindest teilweise zerstört, der Wirkstoff wird freigesetzt und bildet ein optisches Sicherheitsmerkmal. Der Druck beim stoffschlüssigen Verbinden ist dabei beispielsweise der Druck eines Laminationsverfahrens. Der Druck eines Werkzeugs kann dabei der Druck eines Laminationswerkzeugs sein und/oder der Druck eines Werkzeugs eines weiteren Verfahrensschrittes. Der Druck eines Werkzeugs kann dabei ein Druck auf selektive Bereiche der Sicherheitsfolie sein.

Nach einer weiteren bevorzugten Ausführungsform werden die Mikrokapseln an Kreuzungspunkten des Gewebes und/oder in einem Teilbereich zerstört, der Wirkstoff wird freigesetzt und bildet ein optisches Sicherheitsmerkmal. Die zur Sicherheitsfolie beschriebenen Ausführungsformen des Gewebes, der Folien und der Mikrokapseln sind ebenso auf dieses Verfahren anwendbar. Durch die erhöhte Dicke des Gewebes an den Kreuzungspunkten und/oder eines Teilbereichs der Sicherheitsfolie entsteht durch einen aufgebrachten Druck zumindest an diesen Stellen ein erhöhter Druck auf die Mikrokapseln. Durch eine entsprechende Ausführung der Mikrokapseln kann eine Freisetzung des Wirkstoffs nur an den Kreuzungspunkten und/oder in dem Teilbereich erreicht werden. Dabei ist es weiterhin möglich das Verfahren derart auszuführen, dass die Mikrokapseln selektiv in bestimmten Bereichen des Gewebes an den Kreuzungspunkten zerstört werden und/ oder selektiv nur an einem Teil der in einem Bereich angeordneten Kreuzungspunkte zerstört werden. So kann beispielsweise durch eine entsprechende Wahl der Materialien von Kettfaden und Schussfäden das Webmuster durch selektive Zerstörung der Mikrokapseln als optisches Sicherheitsmerkmal nachgebildet werden. Dies gilt ebenso für eine entsprechende Ausführung einer anders strukturierten Sicherheitsfolie, auch hier kann eine entsprechende Ausführung die Zerstörung der Mikrokapseln nur in einem selektierten Teilbereich ermöglichen, beispielsweise in den Bereichen welche nicht nur eine erhöhte Dicke aufweisen, sondern in denen diese Dicke eine vorbestimmte Dicke überschreitet. Auch hier gelten die zur Sicherheitsfolie beschriebenen Ausführungsmöglichkeiten.

Beispielsweise wird der Teilbereich mit freigesetztem Wirkstoff durch einen in einem weiteren Verfahrensschritt selektiv durch ein strukturiertes Werkzeug aufgebrachten Druck gebildet. Dadurch werden nur in diesem Bereich die Wirkstoffkapseln zerstört. Dies kann unabhängig von einer Zerstörung der Mikrokapseln in einem anderen Verfahrensschritt geschehen. Somit kann einzeln oder in Verbindung ein Schriftzug oder Muster durch ein entsprechend ausgeführtes Werkzeug erzeugt werden.

Nach einer weiteren bevorzugten Ausführungsform umfasst das Verfahren weiter einen Schritt der mechanischen Bearbeitung der Sicherheitsfolie, um die Stärke der Sicherheitsfolie zumindest in einem Teilbereich zu verringern, wobei die Mikrokapseln an Kreuzungspunkten des Gewebes und/oder in einem Teilbereich durch die mechanische Bearbeitung zerstört werden, der Wirkstoff freigesetzt wird und ein optisches Sicherheitsmerkmal bildet.

Der Schritt der mechanischen Bearbeitung der Sicherheitsfolie kann dabei beispielsweise ein Schritt zur Verringerung der Stärke der Sicherheitsfolie in zumindest einem Teilbereich sein. Beispielsweise kann durch einen Stempel eine Vertiefung in der Sicherheitsfolie erzeugt werden, wobei die Mikrokapseln im Bereich des Stempels durch den Stempeldruck an Kreuzungspunkten des Gewebes und/oder in einem Teilbereich zerstört werden. Die Möglichkeiten zur selektiven Zerstörung an Kreuzungspunkten gelten selbst verständlich auch hier. Dabei hat eine solche Ausführungsform ebenso wie eine Ausführungsform mit Druckaufbringung mittels eines strukturierten Werkzeugs den Vorteil, dass die zur Zerstörung der Mikrokapseln benötigten Kräfte nicht bei einer üblichen Benutzung oder Verarbeitung der Sicherheitsfolie aufgebracht werden können und eine unbeabsichtigte Zerstörung der Mikrokapseln dabei ausgeschlossen werden kann.

Nach einer weiteren bevorzugten Ausführungsform ist zumindest eine Folie ein Holzwerkstoff und/oder eine Metallfolie und/oder eine metallisierte Folie und/oder eine perforierte Folie und/oder umfasst zumindest eine Folie einen Relieflack und/ oder ist strukturiert. Der Teilbereich der Sicherheitsfolie mit erhöhter Dicke kann dabei beispielsweise durch den Relieflack oder durch Bereiche einer strukturierten Folie gebildet werden.

Nach einer weiteren bevorzugten Ausführungsform werden die Mikrokapseln in einem Trägermaterial als Beschichtung aufgebracht. Dies vereinfacht die Beschichtung und verbessert eine vorzugsweise gleichmäßige Verteilung der Mikrokapseln. Das Trägermaterial kann dabei als Beschichtung zumindest einer der Folien auf einer dem Gewebe und/oder einer anderen Folie zugewandten Seite und/oder als Beschichtung des Gewebes aufgebracht werden.

Nach einer weiteren bevorzugten Ausführungsform umfasst das Verfahren weiter einen Schritt der Aufbringung eines Vergussmaterials auf das Gewebe, wobei das Vergussmaterial eine der Folien bildet. Dies vereinfacht nicht nur die Anordnung des Gewebes zwischen den Folien, sondern verbessert auch die Festigkeit und Manipulationssicherheit der hergestellten Sicherheitsfolie. Beispielsweise wird das Vergussmaterial auf das Gewebe aufgebracht, sodass dieses zumindest teilweise von dem Vergussmaterial eingeschlossen ist. Nach Trocknung des Vergussmaterials wird die dadurch gebildete Folie mit der zweiten Folie verbunden. Eine Folie kann dabei auch durch eine auf einen anderen Bestandteil der Folie aufgebrachte Vergussmasse gebildet werden. Beispielsweise kann die Vergussmasse auf einen Holzwerkstoff oder auf eine strukturierte Metallfolie aufgebracht werden.

Nach einer weiteren bevorzugten Ausführungsform ist der Wirkstoff ein Farbstoff. Die zur Sicherheitsfolie beschriebenen Möglichkeiten der Wahl des Farbstoffs und Ausführung des optischen Sicherheitsmerkmals gelten selbstverständlich auch hier.

Der Gegenstand der Erfindung umfasst weiter ein Verfahren zu Fälschungssicherheit mittels einer Sicherheitsfolie, umfassend zumindest zwei laminierte Folien und eine Vielzahl von Mikrokapseln aus einer Hülle mit einem Wirkstoff als Kernmaterial welcher bei Zerstörung der Hülle freigesetzt wird, wobei die Mikrokapseln auf zumindest einem Teil eines zwischen den Folien angeordneten Gewebes und/ oder auf zumindest einem Teil einer der anderen Folie zugewandten Seite zumindest einer Folie verteilt angeordnet sind, wobei die Mikrokapseln in einem Schritt der Entfernung des Gewebes zwischen den Folien und/oder der Auftrennung und/oder der Abtrennung der Folien zerstört werden, der Wirkstoff freigesetzt wird und ein optisches Sicherheitsmerkmal bildet.

Ein solches Verfahren ermöglicht die Erkennung einer Manipulation bzw. eines Manipulationsversuchs der Sicherheitsfolie. Die Druck- und Zugkräfte welche zur Manipulation, beispielsweise zur Entfernung des Gewebes zwischen den Folien oder zur Auftrennung und/ oder Abtrennung einer Folie aufgebracht werden müssen zerstören die Mikrokapseln im manipulierten Bereich, wodurch diese ihren Wirkstoff freisetzen und dieser ein optisches Sicherheitsmerkmal bildet. Auch Schnitte durch die Sicherheitsfolie erzeugen die zur Zerstörung der Mikrokapseln nötigen Kräfte, wodurch auch hierfür die Fälschungssicherheit erhöht wird.

Somit können erfolgte Manipulationsversuche oder Manipulationen der zur Befestigung verwendeten Sicherheitsfolie optisch dargestellt werden, womit eine versuchte oder erfolgte Manipulation zu erkennen ist.

Die Sicherheitsfolie kann dabei insbesondere eine Sicherheitsfolie nach einer der beschriebenen Ausführungsformen sein und insbesondere durch eine Ausführungsform des beschriebenen Herstellungsverfahrens hergestellt werden.

Gemäß einer bevorzugten Ausführungsform des Verfahrens ist der Wirkstoff ein Farbstoff. Die zuvor beschriebenen Ausführungsmöglichkeiten bezüglich des verwendeten Farbstoffs bzw. Farbgebers und der Ausführung des optischen Sicherheitsmerkmals gelten auch hier.

Die Erfindung umfasst weiter eine Datenseite zur beweglichen Befestigung an einem Träger, insbesondere zur Einbindung in ein Passbuch, umfassend eine Befestigungszone zur Befestigung an dem Träger, wobei zumindest die Befestigungszone die beschriebene Sicherheitsfolie in einer ihrer Ausführungsformen ist.

Ebenso umfasst die Erfindung ein Verfahren zur Herstellung einer Datenseite zur beweglichen Befestigung an einem Träger, insbesondere zur Einbindung in ein Passbuch, wobei eine Befestigungszone zur Befestigung an dem Träger ausgebildet wird, wobei zumindest die Befestigungszone durch ein Verfahren zur Herstellung einer Sicherheitsfolie nach einer der beschriebenen Ausführungsformen hergestellt wird.

Weiter umfasste Erfindung ein Verfahren zur Fälschungssicherheit der beweglichen Befestigung einer Datenseite an einem Träger, insbesondere einer Befestigung in einem Passbuch, umfassend ein Verfahren zur Fälschungssicherheit mittels einer Sicherheitsfolie nach einer der beschriebenen Ausführungsformen.

Bei der Erfindung können die verschiedenen Ausführungsformen, soweit technisch möglich, in beliebiger Weise miteinander kombiniert werden und sind nicht auf ihre jeweiligen Merkmale beschränkt. Dabei sind die beschriebenen Ausführungsformen der Sicherheitsfolie durch ein Verfahren nach einer entsprechend beschriebenen Ausführungsform erhältlich.

In der nachfolgenden Beschreibung von besonders bevorzugten Ausführungsformen wird auf die Figuren verwiesen, in denen zur Veranschaulichung bestimmte Ausführungsformen dargestellt sind, die jeweils einen Teil der Offenbarung der Erfindung darstellen. Dabei werden richtungsbezogene Ausdrücke wie "oben", "unten", "vorne" und "hinten" in Bezug auf die Ausrichtung der beschriebenen Figuren verwendet und dienen daher nur der Veranschaulichung und sind in keiner Weise beschränkend. Auch sind die Figuren lediglich schematisch, wodurch die Größe der Komponenten zur Verdeutlichung verfälscht dargestellt sein kann. Es versteht sich, dass auch andere Ausführungsform möglich sind und strukturelle Änderungen an den dargestellten Ausführungsform vorgenommen werden können, ohne, dass der Umfang der Offenbarung beeinträchtigt wird. Außerdem dient die nachfolgend verwendete Terminologie der Beschreibung und Verdeutlichung und ist nicht beschränkend.

Es zeigen:
- Fig. 1: eine Sicherheitsfolie einer ersten Ausführungsform der Erfindung in einer seitlichen Schnittansicht.
- Fig. 2: eine Detailansicht der in den Ausführungsformen der Erfindung verwendeten Mikrokapseln.
- Fig. 3: eine Sicherheitsfolie einer zweiten Ausführungsform der Erfindung in einer seitlichen Schnittansicht.
- Fig. 4: eine Sicherheitsfolie einer dritten Ausführungsform der Erfindung in einer seitlichen Schnittansicht.
- Fig. 5: eine Sicherheitsfolie einer vierten Ausführungsform der Erfindung in einer seitlichen Schnittansicht.
- Fig. 6: die Verwendung der Sicherheitsfolie einer der in Fig. 1 bis Fig. 5 dargestellten Ausführungsformen zur Befestigung einer Datenseite in einer seitlichen Schnittansicht.
- Fig. 7: die Verwendung der Sicherheitsfolie einer der in Fig. 1 bis Fig. 5 dargestellten Ausführungsformen zur Befestigung einer Datenseite in einem Passbuch in einer seitlichen Schnittansicht.
- Fig. 8: die Verwendung der Sicherheitsfolie einer der in Fig. 1 bis Fig. 5 dargestellten Ausführungsformen zur Befestigung einer Datenseite in einer seitlichen Schnittansicht.
- Fig. 9: ein Verfahren zur Herstellung einer Sicherheitsfolie nach einer der in Fig. 1 bis Fig. 5 dargestellten Ausführungsformen.

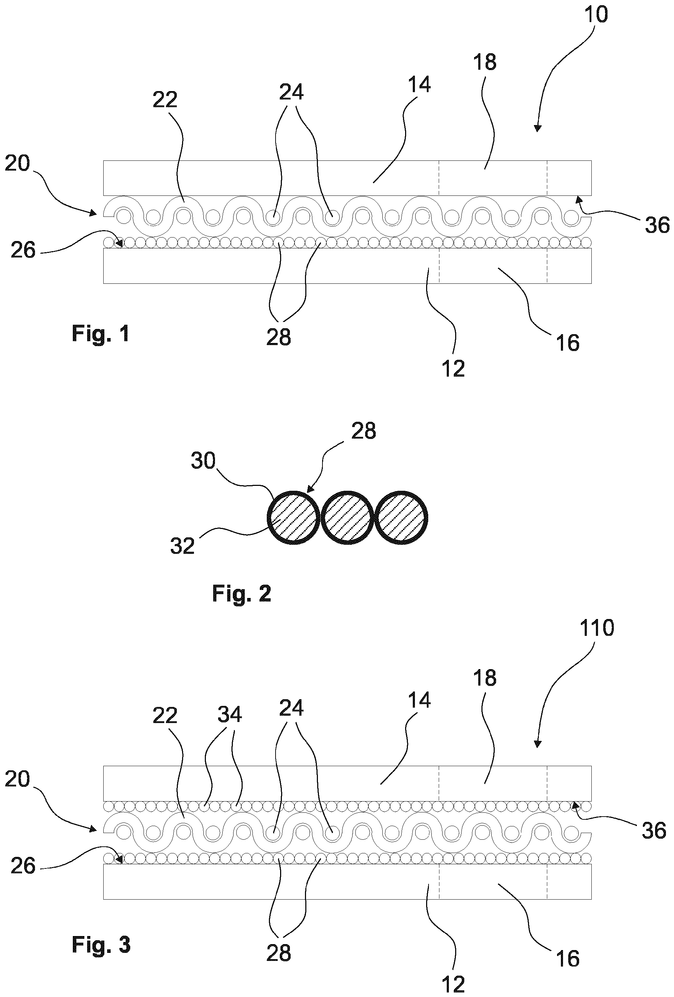

Fig. 1 zeigt eine seitliche Schnittansicht einer ersten bevorzugten Ausführungsform einer erfindungsgemäßen Sicherheitsfolie 10. Dieser umfasst eine erste Folie 12 und eine zweite Folie 14. Die Folien bilden dabei Schichten der Sicherheitsfolie 10 und sind aus geeigneten Materialien mit entsprechenden Flächengewichten gewählt. In der dargestellten Ausführungsform bilden die Folie 12 und die Folie 14 die Ober- bzw. Unterseite der Sicherheitsfolie 10. Dabei sind die erste sowie die weiteren dargestellten Ausführungsformen nicht darauf beschränkt, sondern auf/unter den Folien 12 bzw. 14 können noch weitere Folien als Bestandteil der Sicherheitsfolie 10 angeordnet sein. Dabei kann jede der Folien opak, transluzent oder transparent sein oder derartige Teilbereiche aufweisen. In der vorliegenden Ausführungsform weist die Folie 12 einen Sichtstreifen 16 auf und die Folie 14 weist einen Sichtstreifen 18 auf. In diesen Bereichen sind die Folien transparent oder transluzent. Die Bereiche sind übereinander angeordnet, sodass zumindest im Durchlicht der Bereich zwischen den Folien 12, 14 sichtbar ist.

Zwischen den Folien 12, 14 ist ein Gewebe 20 angeordnet. Dieses ist vorzugsweise ein mechanisch belastbares und reißfestes Gewebe, beispielsweise ein Siebdruckgewebe. Das Gewebe besteht aus Kettfäden 22 und Schussfäden 24, welche vorliegend in einer Leinwandbindung miteinander verwebt sind. Die Folie 12 ist auf ihrer Innenseite 26 mit einer Vielzahl von gleichmäßig verteilten Mikrokapseln 28 beschichtet.

Fig. 2 verdeutlicht den Aufbau der Mikrokapseln 28. Diese bestehen aus einer Hülle 30 und einem Kernmaterial 32. Bei Zerstörung der Hülle 30 wird das Kernmaterial 32 freigesetzt. Vorzugsweise ist das Kernmaterial 32 ein Wirkstoff welcher bei Freisetzung ein optisches Sicherheitsmerkmal bildet. Die Hülle 30 ist dabei derart ausgeführt, dass sie bei Überschreiten einer vorbestimmten Druck- bzw. Zugkraft zerstört wird.

Durch die Anordnung der Mikrokapseln 28 zwischen der Folie 12 und dem Gewebe 20 können diese in verschiedenen Situationen zerstört werden und ein optisches Sicherheitsmerkmal darstellen.

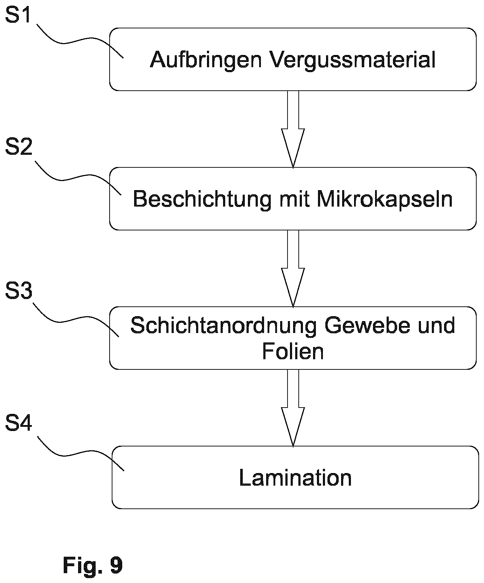

Ein erstes optisches Sicherheitsmerkmal kann bei Herstellung der erfindungsgemäßen Sicherheitsfolie durch den Schritt S4 des in Fig. 9 dargestellten Verfahrens geschaffen werden. Die stoffschlüssige Verbindung der beiden Folien 12, 14 zur Verbindung erfolgt dabei beispielsweise durch ein Laminationsverfahren unter einem gewissen Druck, nachfolgend wird die Verbindung daher als Lamination bezeichnet, kann aber auch jedes andere stoffschlüssige Verbindungsverfahren mit den erforderlichen Eigenschaften sein. Der Druck wirkt dabei gleichmäßig von den vom Gewebe 20 abgewandten Seiten der Folien 12, 14 in Richtung des Gewebes 20. Dieses wird dabei entsprechend komprimiert, wodurch mit steigender Kompression auch jeweils der Druck von der Innenseite 26 der Folie 12 und des Gewebes 20 auf die Mikrokapseln 28 steigt. Durch seinen Aufbau weist das Gewebe 20 an den Kreuzungspunkten von Kettfäden 22 und Schussfäden 24 die höchste Dicke auf. Dementsprechend herrscht an diesen Stellen der höchste Druck auf die Mikrokapseln 28. Durch eine entsprechende Ausführung der Hülle 30 können die Mikrokapseln 28 derart ausgeführt werden, dass der Druck der Lamination an diesen Stellen ausreicht, um die Hülle 30 zu zerstören und das Kernmaterial bzw. den Wirkstoff 32 freizusetzen. Dieser bildet somit an den Kreuzungspunkten des Gewebes 20 ein erstes optisches Sicherheitsmerkmal. Im Sichtstreifen 16,18 ist das Sicherheitsmerkmal im Durchlicht erkennbar. Der erforderliche Druck kann dabei auch durch einen weiteren Verfahrensschritt aufgebracht werden, nachfolgend wird zu Vereinfachung jeweils nur vom Druck der Lamination gesprochen.

Bei einer entsprechenden Ausführung des Gewebes 20 durch eine geeignete Wahl von Kettfäden 22 und Schussfäden 24 kann beispielsweise erreicht werden, dass der Druck der Lamination nicht ausreicht, um die Schussfäden 24 in den Bereichen in denen sie nicht von den Kettfäden 22 in Bezug auf die Mikrokapseln 28 bedeckt sind, mit den Mikrokapseln 28 derart in Berührung zu bringen, dass dort ein ausreichender Druck auf die Mikrokapseln herrscht um diese zu zerstören. Dementsprechend herrscht nur an den Bereichen der Kettfäden 22 ein ausreichender Druck auf die Mikrokapseln 28 die der Innenseite 26 der Folie 12 zugewandt sind und bezüglich dieser Ausrichtung an den Kreuzungspunkten über den Schussfäden 24 liegen, Die Kettfäden 22 bilden somit in Bezug auf die Innenseite 26 die höchste Stelle des Gewebes 20. Dadurch werden die Mikrokapseln 28 auch nur in diesen Bereichen zerstört und setzen ihren Wirkstoff frei. Dies ermöglicht es die Bindung des Gewebes als optisches Sicherheitsmerkmal abzubilden. Nur in den Kreuzungspunkten, in denen die Kettfäden 22 in Bezug auf die Mikrokapseln 28 über den Schussfäden 24 liegen, entsteht ein Bereich mit freigesetztem Wirkstoff, welcher ein Teil des optischen Sicherheitsmerkmals bildet.

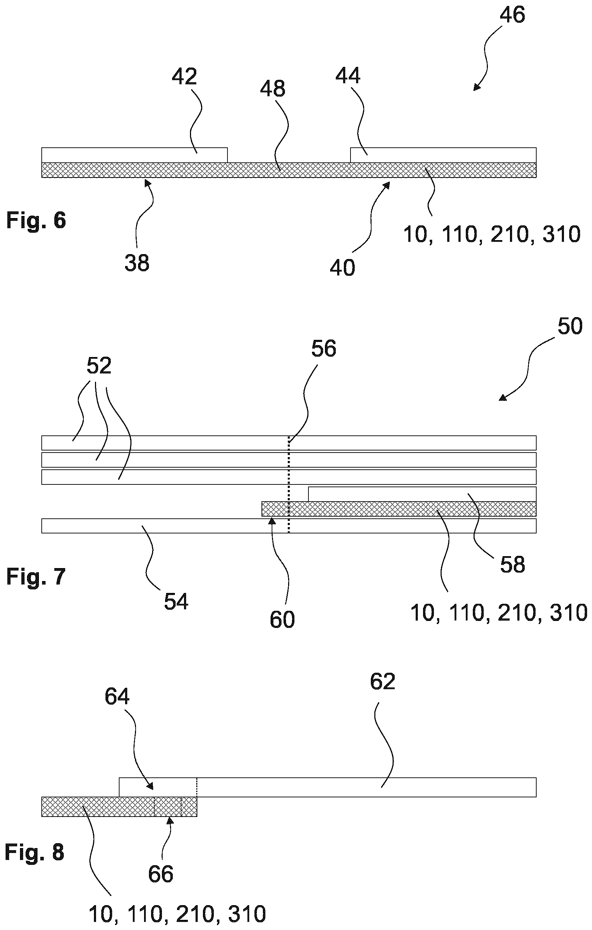

Ein solches optisches Sicherheitsmerkmal ermöglicht es dem Betrachter zu erkennen, ob die eingesetzte Sicherheitsfolie das Original ist oder ob eine Manipulation stattgefunden hat. Beispielsweise könnte versucht werden, das Gewebe 20 aus der Folie 10 zu entfernen und zu ersetzen. Dieser Vorteil ist insbesondere bei einer Anwendung der Sicherheitsfolie 10 zur Einbindung einer Datenseite in ein Passbuch wichtig, siehe dazu Fig. 6 bis Fig. 8. Sollte das Gewebe 20 nicht mehr das Originalgewebe sein, so liegen das optische Sicherheitsmerkmal welches die Bindung des Gewebes abbildet und die Kreuzungspunkte des ersetzten Gewebes nicht mehr genau übereinander und die Manipulation ist sichtbar.

Ein zweites optisches Sicherheitsmerkmal wird bei einem Manipulationsversuch der erfindungsgemäßen Sicherheitsfolie 10 erzeugt. Bei einer Auftrennung der Sicherheitsfolie 10 zum Austausch des Gewebes 20 werden in den aufgetrennten Bereichen durch die dabei entstehenden Druck- und Zugkräfte die Mikrokapseln 28 flächig zerstört, setzen ihren Wirkstoff frei und bilden so ein weiteres optisches Sicherheitsmerkmal. Auch die Auftrennung der Folie 12 bzw. der Folie 14 von einer weiteren hier nicht dargestellten Folie der Sicherheitsfolie 10 führt durch den dazu nötigen Druck zu einer flächigen Zerstörung der Mikrokapseln 28 und damit zur Schaffung eines weiteren optischen Sicherheitsmerkmals.

Fig. 3 zeigt eine weitere bevorzugte Ausführungsform der Erfindung, welche im Wesentlichen der in Fig. 1 dargestellten Ausführungsform entspricht und bei welcher eine zweite Schicht von Mikrokapseln 34 zwischen der Innenseite 36 der zweiten Folie 14 und dem Gewebe 20 angeordnet ist. Hierdurch wird eine höhere Variabilität der Erzeugung von optischen Sicherheitsmerkmalen erreicht. Beispielsweise können die Mikrokapseln 28, 34 unterschiedliche Wirkstoffe enthalten und/oder die Bindung des Gewebes 20 vollständig abbilden. Dabei ist es möglich, die Mikrokapseln 28, 34 als Beschichtungen der Folien 12, 14 auszuführen oder diese als Beschichtung der Fäden 22,24 des Gewebes 20 auszuführen. Auch ist es möglich, die Mikrokapseln derart auszuführen, dass die Mikrokapseln 28 bzw. 34 bei Herstellung der Sicherheitsfolie 110 an Kreuzungspunkten des Gewebes 20 zerstört werden und ein erstes optisches Sicherheitsmerkmal bilden und die Mikrokapseln 34 bzw. 28 bei einer Manipulation der Sicherheitsfolie 110 zerstört werden und ein zweites optisches Sicherheitsmerkmal bilden.

In jeder der dargestellten Ausführungsformen der Fig. 1 bis 5 können die Mikrokapseln 28 bzw. 34 einen Farbstoff als Wirkstoff enthalten. Dieser wird bei Zerstörung lokal freigesetzt bildet einen Farbfleck und/oder färbt das Gewebe 20 und/oder die jeweiligen Innenseiten 26, 28 der Folien 12,14. Das Gewebe 20 kann dabei aus einem Monofilament und/oder einem Polyfilament ausgeführt sein.

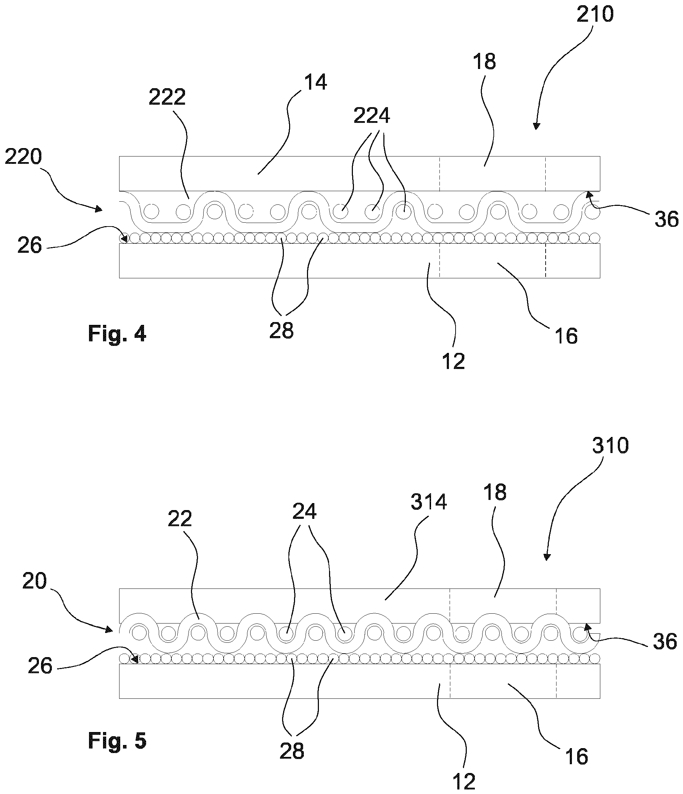

Fig. 4 zeigt eine weitere bevorzugte Ausführungsform der Erfindung, die im Wesentlichen der in Fig. 1 dargestellten Ausführungsform entspricht. Die Sicherheitsfolie 210 umfasst ein Gewebe 220, welches eine Körperbindung im Verhältnis 2:1 aufweist. D. h. die Kettfäden 222 sind abwechselnd jeweils über zwei Schussfäden 224 und unter einem Schussfaden 224 angeordnet. Durch eine entsprechende Ausführung des Gewebes 220 können bei Herstellung der Sicherheitsfolie 210 die Mikrokapseln 28 in jedem Bereich zwischen den Kreuzungspunkten zerstört werden, in denen in Bezug auf die Innenseite 26 der Folie 12 die Kettfäden 222 über den Schussfäden 224 liegen. Somit bildet abwechselnd ein größerer Bereich über und zwischen zwei Kreuzungspunkten und ein kleinerer Bereich über einem einzelnen Kreuzungspunkt die Bestandteile des optischen Sicherheitsmerkmals. Die Bindung des Gewebes ist selbstverständlich nicht auf die dargestellte Bindung beschränkt, diese dient lediglich zur Verdeutlichung der Variabilität des optischen Sicherheitsmerkmals durch Ausführung der Bindung des Gewebes. Hierbei sind beispielsweise spezielle Bindungen von Vorteil, welche ein unregelmäßiges Kreuzungsmuster aufweisen und somit die Fälschungssicherheit erhöhen.

Fig. 5 zeigt eine weitere bevorzugte Ausführungsform der Erfindung, die im Wesentlichen der in Fig. 1 dargestellten Ausführungsform entspricht. Die Sicherheitsfolie 310 umfasst dabei eine erste Folie 12 und eine zweite Folie 314. Die zweite Folie 314 ist als Vergussmasse ausgeführt, welche das Gewebe 20 zumindest teilweise einschließt. Dies verbessert die Herstellung der erfindungsgemäßen Sicherheitsfolie 310, da das Gewebe 20 vor der Lamination fest mit der Folie 314 verbunden ist und bei der Anordnung zwischen den Folien nicht verrutschen kann. Außerdem wird die Festigkeit der Sicherheitsfolie 310 erhöht, da eine Auftrennung von Gewebe 20 und Folie 314 deutlich erschwert ist. Vorzugsweise wird die Folie 314 als Vergussmasse in einem Schritt S1 auf das Gewebe 20 aufgebracht und mit diesem verbunden, siehe auch Fig. 9. Nach Trocknung des Vergussmaterials bildet dieses die zweite Folie 314 und kann mit der ersten Folie 12 laminiert werden. Das Vergussmaterial kann das Gewebe 20 auch vollständig umschließen, bei geeigneter Materialwahl kann auch hier eine selektive Zerstörung der Mikrokapseln 28 an den Kreuzungspunkten des Gewebes 20 ermöglicht werden. Dabei kann selbstverständlich jede der zuvor dargestellten Ausführungsformen eine entsprechende durch ein Vergussmaterial gebildete Folie umfassen.

Fig. 6 zeigt mögliche Verwendungen der in Fig. 1 bis Fig. 5 dargestellten Ausführungsformen der Sicherheitsfolien 10, 110, 210, 310 (nachfolgend kurz 10) zur Befestigung einer Datenseite. Die Sicherheitsfolie 10 ist in ihren äußeren Bereichen 38, 40 jeweils mit einer Datenseite 42, 44 zu einem Sicherheitsdokument 46 verbunden. Die Datenseiten 42, 44 sind dabei beispielsweise aus einem steifen Kunststoffmaterial ausgeführt, wie es üblicherweise bei Personaldokumenten wie beispielsweise einem Personalausweis oder einem Pass verwendet wird. Der Bereich 48 zwischen den Bereichen 38 und 40 bildet dabei eine flexible Verbindungszone 48, in der die Sicherheitsfolie 10 die Funktion einer beweglichen Verbindungszone oder Bindung einnimmt. So können beispielsweise die Datenseiten 42 und 44 aufeinander geklappt werden. Durch die in Fig. 1 bis Fig. 5 beschriebenen möglichen Ausführungsformen können die dort ausgeführten und möglichen optischen Sicherheitsmerkmale zur Verifizierung der Echtheit des entsprechenden Sicherheitsdokuments 46 genutzt werden. Das beschriebene erste optische Sicherheitsmerkmal durch Wirkstofffreisetzung an Kreuzungspunkten des Gewebes 20 kann hierbei beispielsweise als Echtheitsmerkmal dienen und das beschriebene durch Manipulation entstehende zweite optische Sicherheitsmerkmal kann als Manipulationssicherheitsmerkmal dienen.

Fig. 7 zeigt eine weitere mögliche Verwendung der in Fig. 1 bis Fig. 5 dargestellten Ausführungsformen der Sicherheitsfolien 10, 110, 210, 310 (nachfolgend kurz 10) zur Befestigung einer Datenseite in einer seitlichen Schnittansicht. Ein Passbuch 50 umfasst dabei Seiten 52 und eine Hülle 54. Diese sind mittels einer Bindung 56 verbunden. Weiter umfasst das Passbuch 50 eine Datenseite 58 welche mit einer erfindungsgemäßen Sicherheitsfolie 10 verbunden ist. Die Sicherheitsfolie 10 steht in einem Bereich seitlich über die Datenseite 58 über und bildet in diesem die Befestigungszone 60. Diese Befestigungszone 60 ist in die Bindung 56 des Passbuchs 50 eingebunden, wodurch die Datenseite 58 beweglich an dem Passbuch 50 als Träger befestigt ist. Beispielsweise kann die Bindung 56 eine genähte Bindung sein, womit die Befestigungszone 60 als Einnählasche der Datenseite fungiert. Durch die zuvor beschriebenen möglichen optischen Sicherheitsmerkmale der Sicherheitsfolie 10 kann auch hier die Echtheit und Unversehrtheit der Sicherheitsfolie 10 und/oder der Datenseite 58 nachgewiesen werden. Dabei kann selbstverständlich auch das Sicherheitsdokument 46 der Fig. 6 anstelle oder zusätzlich zur Datenseite 58 in das Passbuch 50 eingebunden werden. Durch die beschriebenen möglichen optischen Sicherheitsmerkmale kann beispielsweise sichergestellt werden, dass die in das Passbuch 50 eingebundene Datenseite 58 das Original ist und nicht durch eine Fälschung ersetzt wurde.

Fig. 8 zeigt eine weitere mögliche Verwendung der in Fig. 1 bis Fig. 5 dargestellten Ausführungsformen der Sicherheitsfolien 10, 110, 210, 310 (nachfolgend kurz 10) zur Befestigung einer Datenseite. Die Datenseite 62 umfasst dabei einen Befestigungsbereich 64, an welchem die Datenseite 62 mit einer erfindungsgemäßen Sicherheitsfolie 10 verbunden ist. Diese steht seitlich über die Datenseite 62 über und bildet eine Befestigungszone, beispielsweise entsprechend der Befestigungszone 60 aus Fig. 7. Im Befestigungsbereich 64 ist ein Sichtstreifen 66 in der Sicherheitsfolie 10 ausgebildet. Dieser entspricht beispielsweise dem Bereich der in den Figuren 1-5 gebildeten Sichtstreifen 16, 18. Mittels dieses Sichtstreifens 66 kann auf einfache Weise ein Vorliegen der beschriebenen optischen Sicherheitsmerkmale überprüft werden. Dabei kann auch die Datenseite 62 in ihrem Befestigungsbereich 64 einen entsprechend über dem Sichtstreifen 66 ausgeführten Sichtstreifen umfassen. Dadurch werden die beschriebenen optischen Sicherheitsmerkmale auch im Durchlicht erkennbar.

Fig. 9 zeigt ein Verfahren zur Herstellung einer Sicherheitsfolie nach einer der in Fig. 1 bis Fig. 5 dargestellten Ausführungsformen. Im Schritt S1 wird bei Herstellung einer entsprechenden Ausführungsform ein Vergussmaterial auf das entsprechende Gewebe aufgebracht. Nachfolgend findet der Schritt S2 statt, bei dem zumindest ein Teilbereich des Gewebes und/ oder zumindest eine der Folien auf der dem Gewebe zugewandten Seite mit Mikrokapseln gleichmäßig beschichtet wird. Das Gewebe wird anschließend im Schritt S3 mit zumindest zwei um das Gewebe herum angeordnete Folien zu einer Schichtanordnung zusammengebracht und ausgerichtet. In einem Schritt S4 werden die Folien laminiert und umschließen das Gewebe und die Mikrokapseln. Der Begriff Lamination bzw. das Verfahren Laminieren umfasst auch hier jedes andere stoffschlüssige Verbindungsverfahren mit den erforderlichen Eigenschaften. Weiter vorzugsweise werden dabei an Kreuzungspunkten des Gewebes angeordnete Mikrokapseln zerstört, setzen ihren Wirkstoff frei und dieser bildet ein erstes optisches Sicherheitsmerkmal. Dabei kann das Verfahren selbstverständlich noch weitere hier nicht dargestellte Schritte umfassen.

Die in den Figuren dargestellten Ausführungsformen können selbstverständlich, soweit technisch möglich, in beliebiger Weise miteinander kombiniert werden und sind nicht auf ihre jeweils dargestellten Merkmale beschränkt.

Die vorstehende Beschreibung von bevorzugten in den Figuren dargestellten Ausführungsformen dient lediglich der Veranschaulichung und Verdeutlichung. Sie erhebt keinen Anspruch auf Vollständigkeit und schränkt die Offenbarung nicht auf die dargestellten Ausführungsform ein. Weiter sind verwendete Begriffe wie "erste" oder "zweite" als Nomenklatur verstehen und stellen keine Beschränkung der Anzahl oder Reihenfolge dar.

### Bezugszeichenliste

- 10, 110, 210, 310: Sicherheitsfolie
- 12: erste Folie
- 14, 314: zweite Folie
- 16: Sichtstreifen
- 18: Sichtstreifen
- 20,220: Gewebe
- 22, 222: Kettfäden
- 24, 224: Schussfäden
- 26: Innenseite der Folie 12
- 28: Mikrokapseln
- 30: Hülle
- 32: Kernmaterial
- 34: Mikrokapseln
- 36: Innenseite der Folie 14
- 38: äußerer Bereich
- 40: äußerer Bereich
- 42: Datenseite
- 44: Datenseite
- 46: Sicherheitsdokument
- 48: Verbindungszone
- 50: Passbuch
- 52: Passbuchseiten
- 54: Passbuchhülle
- 56: Passbuchbindung
- 58: Datenseite
- 60: Befestigungszone
- 62: Datenseite
- 64: Befestigungsbereich
- 66: Sichtstreifen

## Patentansprüche

1. Verfahren zur Herstellung einer Sicherheitsfolie (10;110;210;310), insbesondere einer Sicherheitsfolie nach einem der Ansprüche 9 bis 14, umfassend die Schritte
Beschichtung zumindest eines Teils eines Gewebes (20;220) und/oder eines Teils einer ersten Folie (12) mit einer Vielzahl von Mikrokapseln (28,34) aus einer Hülle (30) mit einem Wirkstoff als Kernmaterial (32), welcher bei Zerstörung der Hülle (30) freigesetzt wird;
Anordnung der ersten Folie (12) an einer zweiten Folie (14;314), wobei die Mikrokapseln (28,34) zwischen den Folien (12,14;314) angeordnet sind und/oder wobei das Gewebe (20;220) zwischen den Folien (12,14;314) angeordnet ist und die Mikrokapseln (28,34) zumindest zwischen dem Gewebe (20;220) und zumindest einer Folie (12,14;314) angeordnet sind;
stoffschlüssiges Verbinden der Folien (12,14;314).

2. Verfahren nach Anspruch 1, wobei die Mikrokapseln (23,34) durch einen Druck beim Verbinden der Folien und/oder durch einen Druck eines Werkzeugs zumindest teilweise zerstört werden, der Wirkstoff freigesetzt wird und ein optisches Sicherheitsmerkmal bildet.

3. Verfahren nach Anspruch 2 wobei die Mikrokapseln (28,34) an Kreuzungspunkten des Gewebes (20;220) und/oder in einem Teilbereich der Sicherheitsfolie (10;110;210;310) zerstört werden.

4. Verfahren nach einem der Ansprüche 1 bis 3, wobei zumindest eine Folie (12,14;314) ein Holzwerkstoff und/oder eine Metallfolie und/oder eine metallisierte Folie und/oder eine perforierte Folie ist und/oder wobei zumindest eine Folie (12,14;314) einen Relieflack umfasst und/oder strukturiert ist.

5. Verfahren nach einem der Ansprüche 1 bis 4, wobei die Mikrokapseln (28,34) in einem Trägermaterial als Beschichtung aufgebracht werden.

6. Verfahren nach einem der Ansprüche 1 bis 5, wobei der Wirkstoff ein Farbstoff ist.

7. Verfahren zur Fälschungssicherheit mittels einer Sicherheitsfolie (10;110;210;310),
umfassend zumindest zwei laminierte Folien (12,14;314) und eine Vielzahl von Mikrokapseln (28,34) aus einer Hülle (30) mit einem Wirkstoff als Kernmaterial (32) welcher bei Zerstörung der Hülle (30) freigesetzt wird, wobei die Mikrokapseln (28,34) auf zumindest einem Teil eines zwischen den Folien (12,14;314) angeordneten Gewebes (20;220) und/oder auf zumindest einem Teil einer der anderen Folie (12,14;314) zugewandten Seite (26,36) zumindest einer Folie (12,14;314) verteilt angeordnet sind,
wobei die Mikrokapseln (28,34) in einem Schritt der Entfernung des Gewebes (20;220) zwischen den Folien (12,14;314) und/oder der Auftrennung und/oder der Abtrennung der Folien (12,14;314) zerstört werden, der Wirkstoff freigesetzt wird und ein optisches Sicherheitsmerkmal bildet.

8. Verfahren nach Anspruch 7, wobei der Wirkstoff ein Farbstoff ist.

9. Sicherheitsfolie (10;110;210;310), insbesondere zur beweglichen Befestigung einer Datenseite (42,44;58;62) in einem Passbuch (50),
umfassend zumindest zwei stoffschlüssig verbundene Folien (12,14;314) und eine Vielzahl von Mikrokapseln (28,34) aus einer Hülle (30) mit einem Wirkstoff als Kernmaterial (32) welcher bei Zerstörung der Hülle (30) freigesetzt wird,
wobei die Mikrokapseln (28,34) auf zumindest einem Teil eines zwischen den Folien (12,14;314) angeordneten Gewebes (20;220) und/oder auf zumindest einer der anderen Folie (12,14;314) zugewandten Seite (26,36) zumindest einer Folie (12,14;314) verteilt angeordnet sind.

10. Sicherheitsfolie nach Anspruch 9, wobei der Wirkstoff an Kreuzungspunkten des Gewebes (20;220) und/oder in einem Teilbereich der Sicherheitsfolie (10;110;210;310) freigesetzt ist und ein optisches Sicherheitsmerkmal bildet.

11. Sicherheitsfolie nach Anspruch 9 oder 10 wobei zumindest eine Folie ein Holzwerkstoff und/oder eine Metallfolie und/oder eine metallisierte Folie und/oder eine perforierte Folie ist und/oder wobei zumindest eine Folie einen Relieflack umfasst und/oder strukturiert ist.

12. Sicherheitsfolie einem der Ansprüche 9 bis 11, wobei die Mikrokapseln (28,34) derart ausgeführt sind, dass sie bei Entfernung des Gewebes (20;220) zwischen den Folien (12,14;314) und/oder der Auftrennung und/oder der Abtrennung der Folien (12,14;314) zerstört werden, der Wirkstoff freigesetzt wird und ein optisches Sicherheitsmerkmal bildet.

13. Sicherheitsfolie nach einem der Ansprüche 9 bis 12, wobei der Wirkstoff ein Farbstoff ist.

14. Sicherheitsfolie nach einem der Ansprüche 9 bis 13, wobei zumindest eine Folie (12,14;314) einen transluzenten oder transparenten Teilbereich (16,18) umfasst durch den das optische Sicherheitsmerkmal sichtbar ist.

15. Datenseite (42,44;58;62) zur beweglichen Befestigung an einem Träger, insbesondere zur Einbindung in ein Passbuch (50), umfassend eine Befestigungszone (48;60;64) zur Befestigung an dem Träger, wobei zumindest die Befestigungszone (48;60;64) eine Sicherheitsfolie (10;110;210;310) nach einem der Ansprüche 9 bis 14 ist.
